(19) Europäisches Patentamt

European Patent Office

Office européen des brevets

(11) **EP 2 692 428 A1**

(12) # EUROPEAN PATENT APPLICATION
published in accordance with Art. 153(4) EPC

(43) Date of publication:
**05.02.2014 Bulletin 2014/06**

(21) Application number: **12764666.9**

(22) Date of filing: **26.03.2012**

(51) Int Cl.:
***B01J 23/42*** *(2006.01)*   ***B01J 23/96*** *(2006.01)*
***B01J 38/02*** *(2006.01)*   ***C10G 45/10*** *(2006.01)*

(86) International application number:
**PCT/JP2012/057765**

(87) International publication number:
**WO 2012/133317 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011 JP 2011080576**

(71) Applicants:
- **Japan Oil, Gas and Metals National Corporation**
  **Minato-ku, Tokyo 105-0001 (JP)**
- **INPEX Corporation**
  **Tokyo 107-6332 (JP)**
- **JX Nippon Oil & Energy Corporation**
  **Chiyoda-ku**
  **Tokyo 100-8162 (JP)**
- **Japan Petroleum Exploration Co., Ltd.**
  **Tokyo 100-0005 (JP)**
- **Cosmo Oil Co., Ltd.**
  **Tokyo 105-8528 (JP)**

- **Nippon Steel & Sumikin Engineering Co., Ltd.**
  **Shinagawa-ku,**
  **Tokyo**
  **141-8604 (JP)**

(72) Inventors:
- **TANAKA, Yuichi**
  **Tokyo 100-8162 (JP)**
- **NIITSUMA, Takuya**
  **Tokyo 100-8162 (JP)**
- **TASAKA, Kazuhiko**
  **Tokyo 100-8162 (JP)**
- **IWAMA, Marie**
  **Tokyo 100-8162 (JP)**

(74) Representative: **Grünecker, Kinkeldey,**
**Stockmair & Schwanhäusser**
**Leopoldstrasse 4**
**80802 München (DE)**

(54) **REGENERATED HYDROGENATION REFINING CATALYST AND METHOD FOR PRODUCING A HYDROCARBON OIL**

(57)    The regenerated hydrotreating catalyst of the present invention is a regenerated hydrotreating catalyst prepared by regenerating a used hydrotreating catalyst comprising a catalyst support including an amorphous composite metal oxide having solid acidity, and at least one active metal supported by the catalyst support and selected from noble metals of Group 8 to Group 10 in the periodic table, wherein the regenerated hydrotreating catalyst contains 0.05 to 1% by mass of a carbonaceous substance in terms of a carbon atom based on the entire mass of the catalyst.

EP 2 692 428 A1

## Description

## Technical Field

The present invention relates to a regenerated hydrotreating catalyst and a process for producing a hydrocarbon oil using the regenerated hydrotreating catalyst.

## Background Art

Recently, from the viewpoint of increase in environmental consciousness, liquid fuels in which the contents of environmental load substances such as sulfur and aromatic hydrocarbons are small have been demanded. From such a viewpoint, as a technique which can produce a base stock for fuel oil that substantially contains neither sulfur nor aromatic hydrocarbons and is rich in aliphatic hydrocarbons, particularly, base stock for kerosene and gas oil, a technique that has been attracting attention is one in which synthesis gas (mixed gas containing carbon monoxide gas and hydrogen gas as main components) is produced from a hydrocarbon source such as natural gas by a reforming reaction, hydrocarbons are synthesized from this synthesis gas by a Fischer-Tropsch synthesis reaction (hereinafter, also referred to as the "FT synthesis reaction"), and the hydrocarbons are further refined by hydroprocessing and fractionating to thereby obtain a base stock for fuel oil (see Patent Literature 1, for example). This technique is called GTL (Gas To Liquids) process.

A synthetic oil obtained from synthesis gas by the FT synthesis reaction (hereinafter, also referred to as the "FT synthetic oil") is a mixture containing aliphatic hydrocarbons with a wide carbon number distribution as a main component. A naphtha fraction, a middle distillate fraction, and a wax fraction can be obtained by fractionating this FT synthetic oil according to boiling points. Among the respective fractions, the middle distillate is the most useful fraction corresponding to a kerosene and base stock for gas oil and is desired to be obtained with a high yield.

Meanwhile, in the FT synthesis reaction, in addition to saturated aliphatic hydrocarbons that are principal products, olefins and oxygen-containing compounds such as alcohols containing an oxygen atom derived from carbon monoxide are produced as by-products, and these by-products (impurities) are contained in large amounts in the naphtha fraction or the middle distillate obtained by fractionating the FT synthetic oil. In the case of using hydrocarbons containing these impurities as fuels, there is the possibility that constituent materials of engines may suffer damage, and therefore, it is necessary to remove these impurities. This removal of the impurities can be performed by hydrotreating the hydrocarbon oils such as the naphtha fraction and the middle distillate containing the impurities in an upgrading section of hydrotreating the FT synthetic oil by the GTL process.

In addition, since the hydrocarbons produced by the FT synthesis reaction are basically straight-chain aliphatic hydrocarbons and the straight-chain aliphatic hydrocarbons are highly crystalline, a fuel oil containing these in large amounts loses cold flow property (fluidity in a low temperature). Therefore, for the middle distillate that serves as base stock for kerosene and gas oil, it is necessary to convert the straight-chain aliphatic hydrocarbons to branched-chain hydrocarbons by hydro-isomerization, thereby modifying cold flow property. This hydro-isomerization is generally performed simultaneously with the hydrotreating.

In the hydrotreating step of performing hydrotreating accompanied by the hydro-isomerization of the middle distillate, a hydrotreating catalyst is used in which an active metal that is selected from noble metals of Group 8 to Group 10 in the periodic table and has a hydrogenation activity is supported by a catalyst support having solid acidity such as zeolite and/or an amorphous composite metal oxide (see Patent Literatures 2 and 3, for example).

In general, after the hydrotreating catalyst is packed into a reactor and the operation of hydrotreating is started, an activity of the catalyst decreases with the time on stream. Then, the activity of the catalyst reduces to the predetermined level at which the operation of the hydrotreating step is then stopped and the catalyst is replaced. Further, with regard to a hydrotreating catalyst that has been used (hereinafter, also referred to as the "used hydrotreating catalyst" or simply as the "used catalyst") and taken out from the reactor, this can be regenerated and reused, thereby reducing cost required for the expensive catalyst and also avoiding disposing of the used catalyst as wastes.

In regeneration of the conventional hydrotreating catalyst, the used catalyst was calcined to thereby remove substantially all carbonaceous substances that formed and deposited on the catalyst in the hydrotreating step and were considered to be a great factor in reduction in the activity of the catalyst.

## Citation List

## Patent Literature

[Patent Literature 1] Japanese Patent Application Laid-Open Publication No. 2004-323626
[Patent Literature 2] Japanese Patent Application Laid-Open Publication No. 2008-169355
[Patent Literature 3] Japanese Patent Application Laid-Open Publication No. 2007-269901

## Summary of Invention

### Technical Problem

Meanwhile, an activity of a hydrotreating catalyst obtained by regenerating a used catalyst (hereinafter, also referred to as the "regenerated hydrotreating catalyst" or simply as the "regenerated catalyst") tended not to be recovered to a level equal to that of a new (unused) catalyst, and the yield of a middle distillate obtained in the case of using the regenerated catalyst also tended to reduce compared with the new catalyst. For effectively exploiting the regenerated catalyst that is advantageous in terms of cost and can suppress the discharge of wastes, it has been desired that a regenerated catalyst capable of obtaining a middle distillate, particularly, a gas oil fraction, excellent in cold flow property with a higher yield than that of the conventional regenerated catalyst be provided. Particularly, a regenerated hydrotreating catalyst that gives a high yield of the middle distillate, particularly, a high yield of the gas oil fraction, in a so-called "stable phase" in which slow reduction in activity continues subsequent to the early stage of the operation in which great reduction in activity come to end after an operation time of about 500 hours elapses after replacement of the catalyst and starting of the operation of hydrotreating, has been desired.

In general, the hydrotreating catalyst has, in addition to an activity for the above-described hydrotreating and hydro-isomerization, also an inevitable activity for a cracking reaction (hydrocracking reaction), that is, a reaction that cleaves carbon-carbon bonds in hydrocarbons to reduce the molecular weights. Therefore, in hydrotreating of the middle distillate, a light fraction with a boiling point lower than the lower limit of the boiling point range of the middle distillate is partially produced. Since the production of this light fraction leads to reduction in the yield of the middle distillate, particularly, the gas oil fraction, it is preferable to suppress it; on the other hand, it is also required to maintain the proceeding of hydro-isomerization at a high level and secure the desired cold flow property of a produced oil. For this, the hydrotreating catalyst is desired to maintain a hydro-isomerization activity as much as possible and suppress a cracking activity.

However, with regard to the regenerated hydrotreating catalyst, sufficient studies have not been made yet on a method for maintaining a hydro-isomerization activity as much as possible while suppressing a cracking activity.

The present invention has been made in consideration of such circumstances, and an object of the present invention is to provide a regenerated hydrotreating catalyst that has a high hydro-isomerization activity and a suppressed cracking activity in a stable phase and is capable of obtaining a middle distillate, particularly, a gas oil fraction, excellent in cold flow property with a high yield, and a process for producing a hydrocarbon oil using the regenerated hydrotreating catalyst.

### Solution to Problem

As a result of conducting diligent studies in order to solve the problem above, the present inventors have found that a particular regenerated hydrotreating catalyst containing a carbonaceous substance in a particular amount sufficiently has a hydro-isomerization activity for straight-chain aliphatic hydrocarbons with its cracking activity suppressed in a stable phase, and can enhance the yield of a middle distillate, particularly, a gas oil fraction, excellent in cold flow property, and have completed the present invention based on this finding.

Specifically, the present invention provides a regenerated hydrotreating catalyst prepared by regenerating a used hydrotreating catalyst comprising a catalyst support comprising an amorphous composite metal oxide having solid acidity, and at least one active metal supported by the catalyst support and selected from noble metals of Group 8 to Group 10 in the periodic table, wherein the regenerated hydrotreating catalyst contains 0.05 to 1% by mass of a carbonaceous substance in terms of a carbon atom based on the entire mass of the catalyst.

According to the regenerated hydrotreating catalyst of the present invention having the configuration above, a middle distillate rich in branched-chain aliphatic hydrocarbons and excellent in cold flow property can be obtained with a high yield by hydrotreating a raw oil in which a middle distillate rich in straight-chain aliphatic hydrocarbons is contained in a stable phase.

Preferably, in the regenerated hydrotreating catalyst of the present invention, the amorphous composite metal oxide is at least one selected from silica zirconia, silica alumina, and alumina boria. In the case of using this regenerated hydrotreating catalyst in the hydrotreating of a raw oil comprising a middle distillate rich in straight-chain aliphatic hydrocarbons, a middle distillate rich in branched-chain aliphatic hydrocarbons and excellent in cold flow property can be obtained with a higher yield.

In addition, preferably, in the regenerated hydrotreating catalyst of the present invention, the noble metal is platinum. In the case of using this regenerated hydrotreating catalyst, a middle distillate rich in branched-chain aliphatic hydrocarbons and more excellent in cold flow property can be obtained.

The present invention also provides a process for producing a hydrocarbon oil, comprising contacting a raw oil comprising 80% by mass or more of straight-chain aliphatic hydrocarbons whose boiling point is in the range of 25 to 360°C and comprising 20% by mass or more of straight-chain aliphatic hydrocarbons whose boiling point is in the range of 150 to 360°C, with the above-described regenerated hydrotreating catalyst of the present invention in the presence of molecular hydrogen.

According to the process for producing a hydrocarbon oil of the present invention, a middle distillate rich in branched-chain aliphatic hydrocarbons and excellent in cold flow property can be obtained with a high yield from the above-described raw oil by using the regenerated hydrotreating catalyst of the present invention.

Preferably, in the process for producing a hydrocarbon oil of the present invention, the above-described raw oil is a synthetic oil obtained by a Fischer-Tropsch synthesis reaction. By using the synthetic oil obtained by a Fischer-Tropsch synthesis reaction as the raw oil, a middle distillate that contains neither sulfur nor aromatic hydrocarbons, is rich in branched-chain aliphatic hydrocarbons, and is excellent in cold flow property can be obtained with a high yield.

**Advantageous Effects of Invention**

According to the present invention, a regenerated hydrotreating catalyst that has a high hydro-isomerization activity and a suppressed cracking activity and is capable of obtaining a middle distillate excellent in cold flow property with a high yield, and a process for producing a hydrocarbon oil using the regenerated hydrotreating catalyst can be provided. A middle distillate excellent in cold flow property with a high yield using an inexpensive regenerated catalyst can thereby be obtained.

**Brief Description of Drawings**

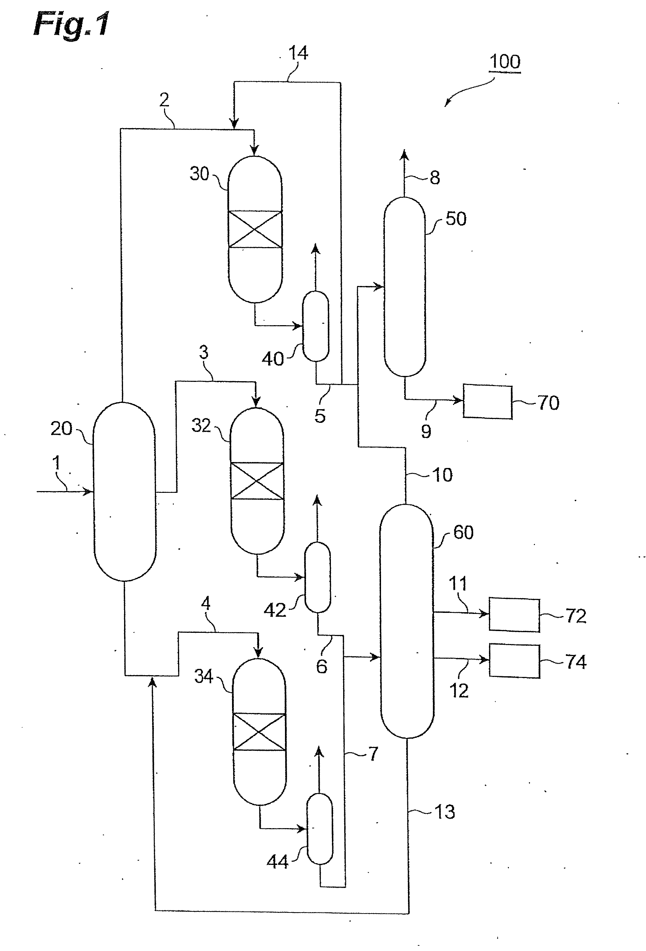

FIG. 1 is a schematic configuration view showing an apparatus for producing a hydrocarbon oil in which one embodiment of a process for producing a hydrocarbon oil of the present invention is carried out.

**Description of Embodiments**

First, a preferable embodiment of a regenerated hydrotreating catalyst of the present invention will be described.

The regenerated hydrotreating catalyst of the present embodiment is a regenerated hydrotreating catalyst prepared by regenerating a used hydrotreating catalyst comprising a catalyst support comprising an amorphous composite metal oxide having solid acidity, and at least one active metal supported by the catalyst support and selected from noble metals of Group 8 to Group 10 in the periodic table, wherein the regenerated hydrotreating catalyst contains 0.05 to 1% by mass of a carbonaceous substance in terms of a carbon atom based on the entire mass of the catalyst.

The regenerated hydrotreating catalyst of the present embodiment is produced by regenerating a used hydrotreating catalyst. The used hydrotreating catalyst and a regeneration treatment thereof will be described later in detail.

Examples of the amorphous composite metal oxide having solid acidity contained in the catalyst support that constitutes the regenerated hydrotreating catalyst of the present embodiment include composite metal oxides comprising a combination of 2 or 3 or more selected from metal oxide units such as alumina, silica, titania, zirconia, boria, and magnesia.

Specific examples of the amorphous composite metal oxide having solid acidity include silica alumina, silica zirconia, alumina boria, alumina zirconia, silica titania, and silica magnesia. Among these, silica alumina, silica zirconia, and alumina boria are preferable, and silica zirconia is more preferable.

The catalyst support may contain a small amount of zeolite. In this case, examples of preferable zeolite include ultra stable Y (USY)-type zeolite, Y-type zeolite, mordenite, and beta zeolite. In this case, the content of the zeolite is not particularly limited, but 0.5 to 10% by mass is preferable, and 1 to 5% by mass is more preferable, based on the entire mass of the catalyst support.

In order to enhance the moldability and mechanical strength of the catalyst support, a binder may be compounded in the catalyst support. Examples of a preferable binder include alumina, silica, and magnesia. In the case of compounding the binder in the catalyst support, the amount thereof to be compounded is not particularly limited, but it is 20 to 98% by mass,, and preferably 30 to 96% by mass based on the entire mass of the catalyst support.

The catalyst support is preferably one that has been molded. Examples of the shape of the molded catalyst support include, but not particularly limited to, a sphere, a cylinder, an irregular cylinder having a trilobes or quadrolobes and a disc. A method for molding the catalyst support is not limited, and a known method such as extrusion molding or compression molding is used. The molded catalyst support is usually calcined.

The active metal supported by the catalyst support in the regenerated hydrotreating catalyst of the present embodiment is at least one selected from noble metals of Group 8 to Group 10 in the periodic table. Specific examples of the active metal are ruthenium and osmium as noble metals of Group 8, rhodium and iridium as noble metals of Group 9, and palladium and platinum as noble metals of Group 10. Among these, platinum and palladium are preferable, and platinum is more preferable. In addition, a combination of platinum-palladium is also preferably used. Here, the periodic table means the long form of the periodic table of the elements based on the specification of IUPAC (International Union of Pure and Applied Chemistry).

As the content of the active metal supported by the catalyst support in the regenerated hydrotreating catalyst of the present embodiment, 0.1 to 3% by mass in terms of the metal atom based on the mass of the catalyst support is preferable. In the case where the content of the active metal is less than the lower limit value, hydrotreating and hydro-isomerization tend not to sufficiently proceed. On the other hand, in the case where the content of the active metal is more than the upper limit value, dispersion of the active metal tends to be reduced to reduce the activity of the catalyst, and cost of the catalyst is increased.

The regenerated hydrotreating catalyst of the present embodiment contains 0.05 to 1% by mass of a carbonaceous substance in terms of a carbon atom based on the entire mass of the catalyst. This carbonaceous substance encompasses a carbon-containing substance that is composed of carbon atoms or carbon atoms and small amounts of hydrogen atoms and/or oxygen atoms and the like, and whose structure is not definitely identified. Specifically, it is a carbonaceous substance obtained by calcining a carbonaceous substance that has formed and deposited on a hydrotreating catalyst during hydrotreating a hydrocarbon source containing a middle distillate, or a carbonaceous substance obtained by attaching an organic compound to a temporarily regenerated hydrotreating catalyst and carbonizing this, or the like, although described later in detail in the description about a method for producing the regenerated hydrotreating catalyst.

In the case where the content of the carbonaceous substance in the regenerated hydrotreating catalyst is less than 0.05% by mass in terms of a carbon atom, it tends to be impossible to sufficiently suppress the activity of the regenerated hydrotreating catalyst for a cracking reaction (cracking activity), particularly in a stable phase, thereby making it difficult to improve the yield of a middle distillate, particularly, the yield of a gas oil fraction, in a produced oil. On the other hand, in the case where the content of the carbonaceous substance is more than 1% by mass, decrease in the activity of the regenerated hydrotreating catalyst for hydro-isomerization (isomerization activity) in a stable phase becomes significant and thus requires increasing a hydrotreating reaction temperature for maintaining the cold flow property of the middle distillate, particularly, the gas oil fraction, to be produced, and the life of the catalyst tends to be shortened.

As a method for quantifying the carbonaceous substance in the regenerated hydrotreating catalyst, a method is adopted in which a sample of the catalyst is heated with high frequency wave in a stream of oxygen for combustion of the carbonaceous substance, and carbon dioxide in the combustion gas is quantified with a detector using infrared absorption (for example, with the carbon/sulfur analyzer EMIA-920V produced by Horiba, Ltd.).

Next, a method for producing the regenerated hydrotreating catalyst of the present embodiment will be described below by taking two aspects as examples.

First, the first embodiment of the method for producing the regenerated hydrotreating catalyst of the present embodiment will be described. The method of the first embodiment is a method of, in a calcination step carried out during subjecting a used hydrotreating catalyst to a regeneration treatment, allowing the predetermined amount of the carbonaceous substance to remain in the used hydrotreating catalyst.

First, a method for producing a new (unused) hydrotreating catalyst serving as a base of the hydrotreating catalyst of the present embodiment will be described. The configuration of a catalyst support and an active metal contained in the new hydrotreating catalyst is the same as that in the above-described regenerated hydrotreating catalyst of the present embodiment.

First, a clay-like kneaded mixture is prepared by kneading a mixture comprising the above-described amorphous composite metal oxide having solid acidity or a gel thereof, the above-described binder, and, if necessary, a liquid such as water.

Next, the above-described kneaded mixture is extrusion molded to thereby obtain a mold, and the mold is further dried at, for example, 70 to 150°C.

Next, the dried mold is calcined to thereby obtain a catalyst support. In this case, the calcination conditions are selected so as to sufficiently exert the mechanical strength of the resulting calcined catalyst support. Combinations of various calcination temperatures and calcination times can be set as the catalyst support calcination conditions, but, for example, as the calcination temperature, the range of 300 to 550°C is preferable, and the range of 350 to 500°C is more preferable. In addition, as the calcination time, the range of about 0.1 hour to about 10 hours is preferable, and the range of about 0.2 hour to about 8 hours is more preferable.

Next, a compound containing the above-described active metal element is supported by the catalyst support obtained as described above. The compound containing the noble metal element used in the supporting is not particularly limited as long as it contains the noble metal element, and a known compound is used, but an inorganic or organic compound soluble in a solvent, particularly, water is used. Specific examples of the compound containing the active metal element include: in the case where the noble metal is ruthenium, $RuCl_3$; in the case where the noble metal is osmium, $OsCl_3 \cdot 3H_2O$ and $(NH_4)_2[OsCl_6]$; in the case where the noble metal is rhodium, $RhCl_3 \cdot 3H_2O$; in the case where the noble metal is iridium, $H_2IrCl_6 \cdot 6H_2OH$; in the case where the noble metal is palladium, $(NH_4)_2PdCl_6$, $Pd(NH_3)_4Cl_2 \cdot H_2O$, and $Pd(C_2H_5CO_2)_2$; and in the case where the noble metal is platinum, $PtCl_2$, $H_2PtCl_6$, $(NH_4)_2PtCl_6$, $H_2Pt(OH)_6$, $Pt(NH_3)_4Cl_2 \cdot H_2O$, and $Pt(C_5H_7O_2)_2$.

The supporting of the compound containing the active metal element can be performed by a known method. Specifically, a method of impregnating the molded catalyst support with a solution, preferably an aqueous solution of the compound, a method of performing ion exchange, or the like, is preferably used. The impregnation method is not particularly limited, and an incipient wetness method or the like is preferably used.

Next, the catalyst support by which the compound containing the active metal element is supported by the method is dried. The drying can be performed at a temperature of, for example, about 70°C to about 150°C.

The thus-obtained catalyst support by which the compound containing the active metal element is supported (hereinafter, also referred to as the "catalyst precursor") is calcined to obtain a hydrotreating catalyst. In the calcination of the catalyst precursor, components other than the active metal atom, that is, counterions, ligands, and the like, are removed from the active metal element-containing compound supported by the catalyst support.

The calcination conditions for the catalyst precursor can be set to combinations of various calcination temperatures and calcination times, but, for example, the calcination temperature is preferably in the range of 300 to 550°C, and more preferably in the range of 350 to 530°C. In addition, as the calcination time, the range of about 0.1 hour to about 10 hours is preferable, and the range of about 0.2 hour to about 8 hours is more preferable.

In this way, the hydrotreating catalyst can be obtained.

Next, the outline of the course of a process will be described in which a used hydrotreating catalyst is produced by carrying out hydrotreating of a raw oil containing a middle distillate using the above-described hydrotreating catalyst.

The hydrotreating catalyst is packed into a hydrotreating reactor, and usually subjected to a reduction treatment with molecular hydrogen (hydrogen gas) to be activated. Then, a raw oil containing hydrocarbons in a middle distillate derived from a FT synthetic oil is fed together with hydrogen gas to the hydrotreating reactor to start hydrotreating (including hydro-isomerization). A reaction temperature is set so that an index for hydro-isomerization described later becomes a predetermined value.

After starting of the operation, an activity (mainly, a hydro-isomerization activity) of the hydrotreating catalyst decreases with the time on stream. Although a cause of this reduction in activity is not clarified, poisoning action by oxygen-containing compounds that are by-products of the FT synthesis reaction contained in the raw oil, or water that is produced by hydrogenation deoxidation of the oxygen-containing compounds, deposition of a carbonaceous substance that has formed on the catalyst, further, aggregation of the active metal by exposure of the catalyst to a high temperature (reaction temperature) for a long time, or the like, is possible. In order to maintain the index for hydro-isomerization throughout the operation period against this reduction in activity and secure the cold flow property of the produced oil, an operation is performed to increase the reaction temperature within a range that compensates for the activity of the catalyst decreased with the time on stream. Then, the operation of the hydrotreating reactor is stopped at the point in time when the reaction temperature has reached the upper limit temperature determined from the viewpoint of the heat resistance of the reactor or increase in cracking reaction, or the like.

After stopping of the operation, the inside of the reactor is purged with nitrogen gas or the like, and the apparatus is cooled and then opened to take out the packed hydrotreating catalyst. This catalyst taken out is the used hydrotreating catalyst.

In the description above, the example in which the unused hydrotreating catalyst is initially packed into the hydrotreating reactor is illustrated, but a regenerated catalyst may be packed instead of the unused catalyst. In this case, when it is determined that the catalyst (used catalyst) taken out from the reactor after stopping of the operation can be reused by subjecting it to a regeneration treatment again, the regeneration treatment may be performed. Namely, the regenerated catalyst of the present embodiment also encompasses those used several times and subjected to the regeneration treatment several times. In the description below, it is performed for an example of the used hydrotreating catalyst obtained from the unused hydrotreating catalyst, unless otherwise noted.

Next, the regeneration treatment of the above-described used hydrotreating catalyst will be described. The regeneration treatment mainly comprises a carbon measurement step of measuring the content of the carbonaceous substance that has deposited in the catalyst in the hydrotreating step and is contained in the used hydrotreating catalyst, a deoiling step, and a calcination step.

In the carbon measurement step, for example, a sample of the collected used hydrotreating catalyst is washed with a low-boiling-point hydrocarbon solvent such as hexane to remove the remaining raw oil of the hydrotreating step and hydrocarbons as a produced oil thereof, the solvent is removed by drying under reduced pressure or the like, and the carbonaceous substance in the catalyst is quantified by subjecting it to the above-described method for quantifying the carbonaceous substance. This result can contribute to the determination of conditions for a calcination step. From change in the mass of the sample between before and after the washing with the solvent, the content of hydrocarbons remaining in the used hydrotreating catalyst can also be determined, and this result can contribute to the determination of conditions for a deoiling step.

The deoiling step is a step of heating the used hydrotreating catalyst under an inert stream such as nitrogen gas, preferably under a stream of nitrogen, to thereby remove the raw oil of the hydrotreating step contained in the catalyst and at least some of hydrocarbons as a produced oil thereof.

Combinations of various temperatures and times can be set as the conditions for the deoiling step, but it is preferable to make a determination in consideration of the amount of hydrocarbons remaining in the used hydrotreating catalyst, which has been determined in the above-described carbon measurement step. For example, the temperature in the deoiling step is preferably in the range of 250 to 550°C, and more preferably in the range of 280 to 500°C. In addition, the deoiling time is preferably in the range of about 0.2 hour to about 10 hours, and more preferably in the range of about 0.5 hour to about 8 hours. If deoiling in this deoiling step is insufficient, the hydrocarbons remaining in the catalyst may cause a rapid oxidation reaction (combustion) in a calcination step in a later stage. In this case, the substantial temperature of the catalyst may excessively rise over the set calcination temperature, thereby aggregating the active metal in the catalyst and thus reducing the activity of the regenerated hydrotreating catalyst. In addition, there is the case where the carbonaceous substance in the used hydrotreating catalyst is also burned down and the predetermined amount of the carbonaceous substance cannot be allowed to remain in the regenerated hydrotreating catalyst.

The deoiled used hydrotreating catalyst is next subjected to a calcination step. In this calcination step, the carbonaceous substance that has formed and deposited on the catalyst in the hydrotreating step and is contained in the used hydrotreating catalyst is removed by oxidative cracking so that the content of the carbonaceous substance contained in the regenerated hydrotreating catalyst of the present embodiment becomes the upper limit value or less according to the present invention, while the content of the carbonaceous substance is adjusted so as not to be less than the lower limit value according to the present invention. In addition, the hydrocarbons remaining in the catalyst through the deoiling step are removed by oxidative cracking. In the case where the amount of the carbonaceous substance contained in the used hydrotreating catalyst is less than an amount appropriate to the intended content of the carbonaceous substance in the regenerated hydrotreating catalyst, the carbonaceous substance may be produced newly by the carbonization of the hydrocarbons contained in the used hydrotreating catalyst. By this calcination step, the content of the carbonaceous substance in the resulting regenerated hydrotreating catalyst is set to 0.05 to 1% by mass in terms of a carbon atom.

Combinations of various temperatures and times can be set as the conditions for the calcination step, but it is preferable to make a determination in consideration of the amount of the carbonaceous substance in the used hydrotreating catalyst, which has been determined in the above-described carbon measurement step. For example, the calcination temperature is preferably in the range of 300 to 550°C, and more preferably in the range of 350 to 530°C. In addition, the calcination time is preferably in the range of about 0.1 hour to about 10 hours, and more preferably in the range of about 0.2 hour to about 8 hours.

Noble metals such as platinum and palladium have a catalytic activity for an oxidation reaction. Therefore, in the calcination step, oxidation of the carbonaceous substance contained in the used hydrotreating catalyst easily proceeds even at a relatively low temperature. Further, the substantial temperature of the catalyst may rise due to the heat of this oxidation reaction, causing the oxidation to rapidly proceed, that is, attaining combustion of the carbonaceous substance. In this case, it tends to be impossible to control the content of the carbonaceous substance in the resulting regenerated hydrotreating catalyst, so that the carbonaceous substance is completely burned out or a catalyst containing a carbonaceous substance with a smaller content than the predetermined value is obtained. Further, in this case, the substantial temperature of the catalyst tends to rise due to the heat of combustion to largely exceed the set calcination temperature, thereby aggregating the active metal and thus reducing the activity of the obtained regenerated hydrotreating catalyst. In order to prevent the occurrence of such a rapid oxidation reaction, it is preferable for the calcination step to suppress the rapid oxidation of the carbonaceous substance at least in the early stage thereof, and select conditions under which oxidation gradually proceeds. Specifically, it is preferable to charge the deoiled used hydrotreating catalyst to a heating apparatus for calcination and sufficiently reduce the heating rate within the temperature range in which at least the oxidation of the carbonaceous substance proceeds (for example, about 250°C to about 400°C) during heating to the set calcination temperature, thereby preventing the rapid oxidation reaction from occurring in the course of the heating. Such a heating rate is, for example, 1 to 50°C/h and preferably about 5°C/h to about 30°C/h.

In addition, it is also preferable to calcine the catalyst precursor in 2 stages. Specifically, it is a method comprising the first stage in which calcination is performed under lower temperature conditions so that the oxidation of the carbonaceous substance gradually proceeds, and the second stage in which after the oxidation proceeds and the amount of the remaining carbonaceous substance is decreased to such a degree that rapid oxidation does not proceed, calcination is performed under higher temperature conditions to control the content of the carbonaceous substance in the catalyst. In this case, for example, the range of 250 to 400°C and, for example, the range of 350 to 550°C are selected as the calcination temperature in the first stage and the second calcination temperature, respectively.

In this way, the regenerated hydrotreating catalyst of the present embodiment is obtained.

Next, the second embodiment of the method for producing the regenerated hydrotreating catalyst of the present embodiment will be described. The method of the second embodiment is a method in which a used hydrotreating catalyst is regenerated by the conventional regeneration treatment method to temporarily produce a regenerated hydrotreating catalyst that does not substantially contain the carbonaceous substance, and the catalyst is dipped in an organic compound and then subjected to a calcination or heating treatment to thereby allow the predetermined amount of the carbonaceous substance to be contained in the catalyst.

The used hydrotreating catalyst used in the method of the second embodiment is the same as the used hydrotreating catalyst used in the above-described method of the first embodiment.

The used hydrotreating catalyst is subjected to a carbon measurement step and a deoiling step (first deoiling step) in the same way as the above-described method of the first embodiment.

The deoiled used catalyst is subjected to a calcination step (first calcination step). In this first calcination step, the carbonaceous substance is removed by oxidative cracking so that the carbonaceous substance in the used catalyst does not substantially remain.

Combinations of various temperatures and times can be set as the conditions for the first calcination step, but it is preferable to make a determination in consideration of the amount of the carbonaceous substance in the used hydrotreating catalyst, which has been determined in the above-described carbon measurement step. For example, the calcination temperature is preferably in the range of 350 to 600°C, and more preferably in the range of 400 to 550°C. In addition, the calcination time is preferably in the range of about 0.1 hour to about 10 hours, and more preferably in the range of about 0.2 hour to about 8 hours.

In the first calcination step, the prevention of rapid oxidation of the carbonaceous substance is preferably performed by performing the adjustment of the heating rate during the heating or the calcination in 2 stages described in the description about the calcination step in the first embodiment above.

The catalyst temporarily regenerated (referred to as the "preliminary regenerated catalyst") through the calcination step as described above is dipped in a liquid organic compound (dipping step). The liquid organic compound is not particularly limited as long as it does not contain sulfur, nitrogen, halogen, or the like that becomes a catalytic poison, but a liquid hydrocarbon is preferable, and, for example, a naphtha fraction, a kerosene fraction, or a gas oil fraction produced by a GTL process is preferably used. A method for dipping the catalyst in the liquid organic compound is not particularly limited.

The preliminary regenerated catalyst dipped in the liquid organic compound is taken out from the organic compound, and a deoiling step (second deoiling step) is performed in inert gas, preferably, nitrogen gas. By the second deoiling step, excessive organic compounds attached to the preliminary regenerated catalyst by the dipping volatilize. Conditions of the second deoiling step are appropriately determined in consideration of the organic compound for dipping, and the like, from ranges in which the temperature is about 180°C to about 500°C and the time is about 0.1 hour to about 10 hours.

Next, the deoiled preliminary catalyst is subjected to a calcination step (second calcination step) under an atmosphere containing molecular oxygen, preferably under an air atmosphere, to carbonize the above-described organic compound, for example, a gas oil remaining in the preliminary regenerated catalyst, thereby producing a carbonaceous substance. The calcination conditions can be set appropriately according to the organic compound used, the content of the organic compound remaining in the preliminary regenerated catalyst after the deoiling step, the intended content of the carbonaceous substance contained in the regenerated hydrotreating catalyst of the present embodiment, and the like. For example, the calcination temperature is preferably in the range of 300 to 550°C, and 350 to 530°C is more preferable. The calcination time is preferably about 0.1 hour to about 10 hours, and more preferably about 0.2 hour to about 8 hours. In this way, the carbonaceous substance is produced in the regenerated catalyst so that its content becomes 0.05 to 1% by mass in terms of a carbon atom.

In the above-described example, a heating treatment under an atmosphere of inert gas such as nitrogen gas may be performed instead of the second calcination step, so that the organic compound attached to the preliminary regenerated catalyst is carbonized to produce the predetermined amount of the carbonaceous substance on the regenerated catalyst.

In this way, the regenerated hydrotreating catalyst of the present embodiment can be obtained.

Next, a process for producing a hydrocarbon oil of the present invention will be described.

The process for producing a hydrocarbon oil of the present invention comprises a step of contacting a raw oil comprising 80% by mass or more of straight-chain aliphatic hydrocarbons whose boiling point is in the range of 25 to 360°C and comprising 20% by mass or more of straight-chain aliphatic hydrocarbons whose boiling point is in the range of 150 to 360°C, with the above-described regenerated hydrotreating catalyst of the present embodiment in the presence of molecular hydrogen. By this step, hydrotreating of the raw oil, that is, removal of olefins and oxygen-containing compounds that are impurities contained in the raw oil, and hydro-isomerization of the straight-chain aliphatic hydrocarbons are performed.

Hereinafter, an embodiment of the process for producing a hydrocarbon oil of the present invention will be described with reference to an example of a GTL process in which the process for producing a hydrocarbon oil of the present invention is preferably used.

FIG. 1 is a schematic configuration view showing a production facility corresponding to an upgrading unit in the GTL process including an apparatus for producing a hydrocarbon oil in which one embodiment of the process for producing a hydrocarbon oil of the present invention is carried out.

First, referring to FIG. 1, an apparatus for producing naphtha and a kerosene and base stock for gas oil from hydrocarbons obtained by a FT synthesis reaction (FT synthetic oil), in which a suitable embodiment of the process for producing a hydrocarbon oil of the present invention is carried out, will be described.

An apparatus for producing a hydrocarbon oil 100 shown in FIG. 1 is fed with a FT synthetic oil through a line 1 from a FT synthesis reaction apparatus (not shown) that synthesizes a hydrocarbon oil (FT synthetic oil) by a FT synthesis reaction with a synthesis gas (mixed gas of carbon monoxide gas and hydrogen gas) as a raw material. The FT synthesis reaction apparatus is fed with synthesis gas from a reforming reaction apparatus (not shown) that reforms natural gas to produce synthesis gas.

The apparatus for producing a hydrocarbon oil 100 mainly comprises a first fractionator 20 of fractionating a FT synthetic oil to a raw naphtha fraction, a raw middle distillate, and a raw wax fraction, a naphtha fraction hydrotreating reactor 30 of hydrotreating the raw naphtha fraction fed from the top of the first fractionator 20 by a line 2, a middle distillate hydrotreating reactor 32 of hydrotreating and hydro-isomerizing the raw middle distillate fed from the middle portion of the first fractionator 20 by a line 3, a wax fraction hydrocracking reactor 34 of hydrocracking the raw wax fraction fed from the bottom of the first fractionator 20 by a line 4, and a second fractionator 60 of fractionating the hydrotreated middle distillate and the hydrocracked wax fraction.

Here, the naphtha fraction is a hydrocarbon fraction with a boiling point of approximately 25°C or higher and lower than approximately 150°C (approximately $C_5$ to $C_{10}$), the middle distillate is a hydrocarbon fraction with a boiling point of approximately 150 to 360°C (approximately $C_{11}$ to $C_{21}$), and the wax fraction is a hydrocarbon fraction with a boiling point of higher than approximately 360°C (approximately $C_{22}$ or more). In addition, the raw naphtha fraction, the raw middle distillate, and the raw wax fraction mean the respective fractions that are neither hydrotreated nor hydrocracked and contain olefins and oxygen-containing compounds such as alcohols that are impurities (by-products of the FT synthesis reaction) other than saturated aliphatic hydrocarbons (paraffins).

The middle distillate hydrotreating reactor 32 is an apparatus for carrying out the process for producing a hydrocarbon oil of the present embodiment and is preferably packed with the above-described regenerated hydrotreating catalyst of the present embodiment as a fixed bed in the inside thereof. The raw middle distillate fed by the line 3 is mixed with hydrogen gas fed by a hydrogen gas feed line (not shown) connected to the line 3, heated to a reaction temperature by a heating device (not shown) such as a heat exchanger provided on the line 3, thereafter fed to the middle distillate hydrotreating reactor 32 and subjected to hydrotreating including hydro-isomerization.

The naphtha fraction hydrotreating reactor 30 is preferably packed with a hydrotreating catalyst as a fixed bed. The hydrotreating catalyst may be the above-described regenerated hydrotreating catalyst of the present embodiment. The raw naphtha fraction fed by the line 2 is mixed with hydrogen gas fed by a hydrogen gas feed line (not shown) connected to the line 2, heated to a reaction temperature by a heating device (not shown) such as a heat exchanger provided on the line 2, thereafter fed to the naphtha fraction hydrotreating reactor 30 and hydrotreated.

The wax fraction hydrocracking reactor 34 is preferably packed with a hydrocracking catalyst as a fixed bed. The raw wax fraction fed by the line 4 is mixed with an uncracked wax (described later in detail) recycled by a line 13 connected to the line 4 and hydrogen gas fed by a hydrogen gas feed line (not shown) connected to the line 4, heated to a reaction temperature by a heating device (not shown) such as a heat exchanger provided on the line 4, thereafter fed to the wax fraction hydrocracking reactor 34 and hydrocracked.

The apparatus for producing a hydrocarbon oil 100 comprises gas liquid separators 40, 42, and 44 downstream of the naphtha fraction hydrotreating reactor 30, the middle distillate hydrotreating reactor 32, and the wax fraction hydrocracking reactor 34, respectively, to separate, into gas and liquid, hydrotreated or hydrocracked liquid hydrocarbons discharged from each reactor, and a gas component containing unreacted hydrogen gas and gaseous hydrocarbons. In addition, each gas liquid separator is equipped with an apparatus (not shown) for discharging water produced as by-products during hydrotreating or hydrocracking.

The apparatus for producing a hydrocarbon oil 100 comprises, downstream of the gas liquid separator 40, a naphtha stabilizer 50 of discharging, from a line 8 connected to the top thereof, gaseous hydrocarbons containing hydrocarbons having carbon number of 4 or less as a main component from the hydrotreated naphtha fraction fed through the line 5. Also, a naphtha tank 70 for being fed by a line 9 from the bottom of the naphtha stabilizer 50 with the naphtha fraction from which gaseous hydrocarbons have been removed and storing this is provided therein.

The second fractionator 60 is provided downstream of the gas liquid separator 42 and the gas liquid separator 44 and fed with the hydrotreated middle distillate fed from the gas liquid separator 42 through a line 6 and the hydrocracked wax fraction fed from the gas liquid separator 44 through a line 7, to fractionate their mixture. The second fractionator 60 is provided with a line 11 which is connected to the middle portion thereof for discharging the fractionated kerosene fraction and transferring it to a kerosene tank 72, and a line 12 which is connected to the lower portion thereof for discharging the fractionated gas oil fraction and transferring it to a gas oil tank 74. In addition, the line 13 for discharging a bottom oil of the second fractionator 60 containing the uncracked wax, which has not sufficiently be cracked in the wax fraction hydrocracking reactor 34, as a main component, and recycling it to the line 4 upstream of the wax fraction hydrocracking reactor 34 is connected to the bottom of the second fractionator 60. Further, a line 10 of discharging light hydrocarbons containing the naphtha fraction as a main component and feeding it to the naphtha stabilizer 50 is connected to the top of the second fractionator 60.

Next, referring to FIG. 1, one embodiment of the process for producing a hydrocarbon oil of the present invention will be described.

The above-described regenerated hydrotreating catalyst of the present embodiment is packed into the middle distillate hydrotreating reactor 32. Then, the regenerated hydrotreating catalyst is activated by reduction before the raw oil is charged to the middle distillate hydrotreating reactor 32. The reduction treatment is usually performed by contacting the regenerated hydrotreating catalyst under heating with molecular hydrogen (hydrogen gas). Specifically, the reduction is performed in a stream of hydrogen, for example, at a temperature of about 250°C to about 550°C for a time of about 0.5 hour to about 20 hours.

A FT synthetic oil fed from a FT synthesis reaction apparatus (not shown) through a line 1 is fractionated in the first fractionator 20 to a raw naphtha fraction, a raw middle distillate, and a raw wax fraction. The fractionated raw middle distillate is taken out by the line 3 from the middle portion of the first fractionator 20. The middle distillate is generally a fraction comprising a mixture of hydrocarbons with a boiling point of approximately 150 to 360°C (approximately $C_{11}$ to $C_{21}$). The raw middle distillate obtained by fractionating the FT synthetic oil contains straight-chain saturated aliphatic hydrocarbons with the boiling point range as a main component and contains olefins and oxygen-containing compounds such as alcohols that are by-products of the FT synthesis reaction, as impurities. The raw middle distillate is mixed with hydrogen gas, thereafter heated to a reaction temperature and fed to the middle distillate hydrotreating reactor 32. The reactor is packed with the above-described regenerated hydrotreating catalyst of the present embodiment, and the mixture of the raw middle distillate and hydrogen gas comes into contact with the catalyst, thereby causing hydrotreating and hydro-isomerization of the raw middle distillate to proceed.

The hydrotreating of the raw middle distillate is a reaction that removes impurities (olefins and oxygen-containing compounds such as alcohols) contained in the raw middle distillate. The olefins (unsaturated aliphatic hydrocarbons) are hydrogenated and converted to saturated aliphatic hydrocarbons (paraffins). In addition, the oxygen-containing compounds such as alcohols are hydro-deoxidized and converted to saturated aliphatic hydrocarbons, water, and the like.

Hydro-isomerization converts straight-chain saturated aliphatic hydrocarbons (normal paraffins) to branched-chain saturated hydrocarbons (isoparaffins) by skeletal isomerization. By the hydro-isomerization, the content of normal paraffins in the middle distillate is reduced, while the content of isoparaffins is increased, thereby reducing the crystallinity of the paraffins and thus improving cold flow property as a fuel oil. As an index for determining the degree of proceeding of hydro-isomerization, for example, the ratio of octadecanes having a branched chain (isooctadecanes) to hydrocarbons having carbon number of 18 (C18; octadecanes) (100 x mass of isooctadecanes/mass of all octadecanes (%); hereinafter, referred to as the "$C_{18}$ isomer ratio") in the produced oil can be used. For satisfying cold flow property as base stock for a gas oil, it is preferable that the $C_{18}$ isomer ratio be, for example, 85% or more.

In the present embodiment, in order to perform hydro-isomerization so that the degree of proceeding of hydro-isomerization represented by, for example, the $C_{18}$ isomer ratio, satisfies the criterion, operation is performed mainly by adjusting the reaction temperature of the middle distillate hydrotreating reactor 32.

As described above, an activity of the hydrotreating catalyst generally decreases with the time on stream in the hydrotreating reactor. The same holds true for the case of using the regenerated catalyst as the hydrotreating catalyst. Thus, in order to keep the $C_{18}$ isomer ratio, for example, at 85%, an operation of increasing the reaction temperature is performed to compensate for the activity of the catalyst decreased with the time on stream. Specifically, the produced oil discharged from the hydrotreating reactor 32 for each operation time is analyzed by gas chromatograph, the $C_{18}$ isomer ratio is calculated, and the reaction temperature for the operation time is determined so that this $C_{18}$ isomer ratio becomes, for example, 85%.

The reaction temperature in the hydrotreating reactor 32 is 180 to 400°C, preferably 200 to 370°C, more preferably 250 to 350°C, and particularly preferably 280 to 340°C. Here, the reaction temperature refers to the weight average temperature of a catalyst bed in the middle distillate hydrotreating reactor 32. If the reaction temperature is higher than 400°C, not only cracking into the light fraction tends to proceed to reduce the yield of the middle distillate, but also the product tends to be colored and to be restricted to use as the base stock for fuel oil. On the other hand, if the reaction temperature is lower than 180°C, oxygen-containing compounds such as alcohols tend not to sufficiently be removed to remain, and production of isoparaffins by the hydro-isomerization reaction tends to be suppressed.

A pressure (hydrogen partial pressure) in the middle distillate hydrotreating reactor 32 is preferably 0.5 to 12 MPa, and more preferably 1 to 5 MPa. In the case where the pressure is less than 0.5 MPa, hydrotreating and hydro-isomerization tend not to sufficiently proceed; on the other hand, in the case where the pressure is higher than 12 MPa, high pressure resistance is demanded for the apparatus, and facility cost tends to be increased.

A liquid hourly space velocity (LHSV) in the middle distillate hydrotreating reactor 32 is preferably 0.1 to 10 $h^{-1}$, and more preferably 0.3 to 3.5 $h^{-1}$. In the case where the LHSV is lower than 0.1 $h^{-1}$, cracking into the light fraction tends to proceed to reduce the yield of the middle distillate, and productivity tends to be reduced; on the other hand, in the case where the LHSV is higher than 10.0 $h^{-1}$, hydrotreating and hydro-isomerization tend not to sufficiently proceed.

A ratio of hydrogen gas/oil in the middle distillate hydrotreating reactor 32 is preferably 50 to 1000 NL/L, and more preferably 70 to 800 NL/L. Here, the "NL" means a hydrogen capacity (L) at the normal state (0°C, 101325 Pa). In the case where the ratio of hydrogen gas/oil is lower than 50 NL/L, hydrotreating and hydro-isomerization tend not to sufficiently proceed; on the other hand, in the case where the ratio of hydrogen gas/oil is higher than 1000 NL/L, a large-sized hydrogen feeding apparatus and the like tend to be needed.

In the middle distillate hydrotreating reactor 32, the hydro-isomerization reaction is performed, as described above, to convert straight-chain saturated aliphatic hydrocarbons (normal paraffins) that are main components in the raw middle distillate to branched-chain saturated hydrocarbons (isoparaffins), but it is necessary to convert the normal paraffins over a given proportion in the raw middle distillate to isoparaffins (for example, it is preferable that the $C_{18}$ isomer ratio be 85% or more) for satisfying the specification of the cold flow property as a liquid fuel base stock of the gas oil fraction obtained from the produced oil.

On the other hand, in the hydrotreating of the raw middle distillate, the cracking reaction (hydrocracking reaction) of hydrocarbons occurs as a side reaction. This cracking reaction cleaves carbon-carbon bonds in hydrocarbons to produce hydrocarbons having fewer carbon atoms. Thus, if this cracking reaction becomes predominant, production of light hydrocarbons is increased to reduce the yield of the middle distillate (whose boiling point range is approximately 150 to 360°C), particularly, the yield of the gas oil fraction (whose boiling point range is approximately 250 to 360°C).

The hydro-isomerization reaction is known to proceed by two catalytic functions, that is, a hydrogenation-dehydrogenation activity by the active metal and the solid acidity of the catalyst support in the hydrotreating catalyst, while the hydrocracking reaction also proceeds by these two catalytic functions. Thus, if the hydro-isomerization is allowed to proceed to a given level with the reaction temperature of the hydrotreating reactor 32 adjusted for securing the cold flow property of the produced oil, particularly, the gas oil fraction, using the conventional regenerated hydrotreating catalyst, the cracking reaction also tends to proceed simultaneously therewith to reduce the yield of the middle distillate, particularly, the yield of the gas oil fraction.

The conventional regenerated hydrotreating catalyst that does not contain the carbonaceous substance has a relatively large cracking activity in a stable phase after the operation time of about 500 hours after starting of the operation. Thus, if the reaction temperature was set so as to maintain the predetermined level of hydro-isomerization (for example, a $C_{18}$ isomer ratio of 85%), the cracking reaction tended to proceed as a side reaction to increase the production of a light fraction with a boiling point lower than the lower limit of the boiling point range of the gas oil fraction (whose boiling point range is, for example, 250 to 360°C) and reduce the yield of the gas oil fraction.

By contrast, by having the above-described particular configuration, the regenerated hydrotreating catalyst of the present embodiment can achieve both a high hydro-isomerization activity and a suppressed hydrocracking activity, and by using the catalyst, a high $C_{18}$ isomer ratio and a high yield of the middle distillate, particularly, a high yield of the gas oil fraction, can be achieved simultaneously.

Although the mechanism of effect under which such features possessed by the regenerated hydrotreating catalyst of the present embodiment are exerted is not clarified, the present inventors presume it as follows. Namely, the hydrotreating catalyst has two functions, that is, a hydrogenation-dehydrogenation activity by the active metal and solid acidity possessed by the catalyst support. The hydro-isomerization reaction and the hydrocracking reaction that is a side reaction are considered to proceed by the two functions combined together. On the other hand, the carbonaceous substance contained in the hydrotreating catalyst is considered to inhibit, particularly, the action of active sites (acid sites) having solid acidity on the catalyst support. One having an activity for mainly the cracking reaction or both the cracking reaction and the isomerization reaction and one having an activity for mainly hydro-isomerization are presumed to be included in the acid sites. In the regenerated hydrotreating catalyst of the present embodiment, 0.05 to 1% by mass of the carbonaceous substance in terms of a carbon atom is contained, and this carbonaceous substance is presumed to thereby selectively act on the acid site having an activity for the cracking reaction or both the cracking reaction and the isomerization reaction to inhibit the activity. Thus, it is considered that although this carbonaceous substance reduces some hydro-isomerization activities, the range of this reduction is small, and by contrast, it can considerably suppress the activity for the cracking reaction. As a result, even if the reaction temperature is increased so that reduction in hydro-isomerization activity is compensated in order to maintain the necessary $C_{18}$ isomer ratio, a high yield of the gas oil fraction compared with the conventional regenerated hydrotreating catalyst can presumably be obtained because the cracking reaction is sufficiently suppressed. In addition, although the reason why the high middle distillate selectivity of the catalyst can be maintained even in a stable phase is not necessarily clarified, this is considered to be related to the fact that a regenerated hydrotreating catalyst in which the content of the carbonaceous substance is less than 0.05% by mass has the remarkable production of a new carbonaceous substance in the initial stage of the operation, whereas the new carbonaceous substance is less produced in the hydrotreating catalyst of the present embodiment.

The product discharged from the middle distillate hydrotreating reactor 32 is introduced into the gas liquid separator 42 by which a liquid product (liquid hydrocarbons) is separated from a gas component containing unreacted hydrogen gas and gaseous hydrocarbons as main components. The liquid hydrocarbons are introduced in the second fractionator 60 downstream thereof, and the gas component is reused in the hydroprocessing reaction.

The raw naphtha taken out from the top of the first fractionator 20 is mixed with hydrogen gas through the line 2, heated to a reaction temperature, fed to the naphtha fraction hydrotreating reactor 30 and hydrotreated.

As the hydrotreating catalyst packed into the naphtha fraction hydrotreating reactor 30, a known hydrotreating catalyst can be used, but the above-described regenerated hydrotreating catalyst of the present embodiment may be used. In the naphtha fraction hydrotreating reactor 30, the olefins contained in the raw naphtha fraction are converted to saturated hydrocarbons by hydrogenation, and the oxygen-containing compounds such as alcohols are converted to hydrocarbons, water, and the like by hydro-deoxidation. The raw naphtha fraction is hydrocarbons having carbon number of approximately 10 or less, and rare occurrences of hydro-isomerization and hydrocracking as its characteristics.

In the raw naphtha fraction, the olefins and the oxygen-containing compounds such as alcohols are contained at relatively high concentrations, and the large heat of reaction is generated in the hydrotreating reaction that converts these to saturated hydrocarbons. Thus, if only the raw naphtha fraction is subjected to hydrotreating, there is the case where the temperature of the naphtha fraction excessively rises in the naphtha fraction hydrotreating reactor 30. Thus, it is preferable that a portion of the hydrotreated naphtha fraction discharged from the naphtha fraction hydrotreating reactor 30 be recycled by a line 14 to the line 2 upstream of the naphtha fraction hydrotreating reactor 30, thereby diluting the raw naphtha fraction with the already-refined naphtha fraction and then subjecting it to hydrotreating.

A reaction temperature in the naphtha fraction hydrotreating reactor 30 is 180 to 400°C, preferably 280 to 350°C, and more preferably 300 to 340°C. Here, the reaction temperature refers to the average temperature of a catalyst bed in the naphtha fraction hydrotreating reactor 30. When the reaction temperature is the lower limit temperature or higher, the raw naphtha fraction is sufficiently hydrotreated, and when the reaction temperature is the upper limit temperature or lower, reduction in the life of the catalyst is suppressed.

A pressure (hydrogen partial pressure) in the naphtha fraction hydrotreating reactor 30 is preferably 0.5 to 12 MPa, and more preferably 1 to 5 MPa. When the pressure is 0.5 MPa or higher, the raw naphtha fraction is sufficiently hydrotreated, and when the pressure is 12 MPa or lower, facility cost for enhancing the pressure resistance of the facility can be reduced.

A liquid hourly space velocity (LHSV) in the naphtha fraction hydrotreating reactor 30 is preferably 0.1 to 10 $h^{-1}$, and more preferably 0.3 to 3.5 $h^{-1}$. When the LHSV is 0.1 $h^{-1}$ or higher, the capacity of the reactor does not have to be excessively large, and when the LHSV is 10 $h^{-1}$ or lower, the raw naphtha fraction is efficiently hydrotreated.

A ratio of hydrogen gas/oil in the naphtha fraction hydrotreating reactor 30 is preferably 50 to 1000 NL/L, and more preferably 70 to 800 NL/L. Here, the "NL" means a hydrogen capacity (L) at the normal state (0°C, 101325 Pa). When the ratio of hydrogen gas/oil is 50 NL/L or higher, the raw naphtha fraction is sufficiently hydrotreated, and when the ratio of hydrogen gas/oil is 1000 NL/L or lower, a facility for feeding a large amount of hydrogen gas becomes unnecessary, and an increase in operation cost can be suppressed.

The produced oil discharged from the naphtha fraction hydrotreating reactor 30 is separated in the gas liquid separator 40 into gas and liquid as a gas component containing unreacted hydrogen gas as a main component and liquid hydrocarbons. The gas component is reused in the hydroprocessing reaction, and the liquid hydrocarbons are fed through the line 5 to the naphtha stabilizer 50 by which $C_4$ or less gaseous hydrocarbons are then removed from the line 8 and the naphtha fraction consisting mainly of $C_5$ to $C_{10}$ is stored into the naphtha tank 70 through the line 9.

The raw wax fraction taken out from the bottom of the first fractionator 20 by the line 4 is mixed with an uncracked wax (described later in detail) recycled by the line 13 connected to the line 4 and hydrogen gas, heated to a reaction temperature, fed to the wax fraction hydrocracking reactor 34 and hydrocracked.

Examples of the hydrocracking catalyst packed into the wax fraction hydrocracking reactor 34 include catalysts in which a metal belonging to Group 8 to Group 10 in the periodic table as an active metal is supported by a catalyst support comprising a solid acid.

Examples of the suitable catalyst support include those comprising crystalline zeolites such as ultra stable Y (USY)-type zeolite, Y-type zeolite, mordenite, and β zeolite, and one or more solid acids selected from amorphous composite metal oxides having solid acidity, such as silica alumina, silica zirconia, and alumina boria. Further, as the catalyst support, those comprising USY-type zeolite, and one or more solid acids selected from silica alumina, alumina boria, and silica zirconia are more preferable, and those comprising USY-type zeolite and alumina boria and/or silica alumina are still more preferable.

The average particle size of USY-type zeolite is not particularly limited, but it is preferably not larger than 1.0 μm,, and more preferably not larger than 0.5 μm. In addition, in USY-type zeolite, it is preferable that a molar ratio of silica/alumina (molar ratio of silica to alumina) be 10 to 200, and it is more preferable that the molar ratio be 15 to 100, and it is still more preferable that the molar ratio be 20 to 60.

In addition, it is preferable that the catalyst support be constituted by containing 0.1 to 80% by mass of a crystalline zeolite and 0.1 to 60% by mass of an amorphous composite metal oxide having solid acidity.

The catalyst support can be produced as follows: a catalyst support comprising the solid acid and a binder is molded, and calcined. The proportion of the solid acid to be compounded is preferably 1 to 70% by mass, and more preferably 2 to 60% by mass based on the entire mass of the catalyst support. In addition, in the case where the catalyst support is constituted by containing USY-type zeolite, the proportion of USY-type zeolite to be compounded is preferably 0.1 to 10% by mass,, and more preferably 0.5 to 5% by mass based on the entire mass of the catalyst support. Further, in the case where the catalyst support is constituted by containing USY-type zeolite and alumina boria, it is preferable that the proportion of USY-type zeolite to alumina boria to be compounded (USY zeolite/alumina boria) be 0.03 to 1 in the mass ratio. In addition, in the case where the catalyst support is constituted by containing USY-type zeolite and silica alumina, it is preferable that the proportion of USY-type zeolite to silica alumina to be compounded (USY zeolite/silica alumina) be 0.03 to 1 in the mass ratio.

The binder is not particularly limited, but alumina, silica, titania, and magnesia are preferable, and alumina is more preferable. The amount of the binder to be compounded is preferably 20 to 98% by mass, and more preferably 30 to 96% by mass based on the entire mass of the catalyst support.

A calcination temperature of the catalyst support is preferably in the range of 400 to 550°C, more preferably in the range of 470 to 530°C, and still more preferably in the range of 490 to 530°C.

Examples of the metal belonging to Group 8 to Group 10 in the periodic table as the active metal specifically include cobalt, nickel, rhodium, palladium, iridium, and platinum. Among them, metals selected from nickel, palladium, and platinum, preferably palladium and platinum are preferably used singularly or in combinations of two or more. These metals can be supported on the catalyst support mentioned above by a standard method such as impregnation and ion exchange. The amount of the metal to be supported is not particularly limited, but it is preferable that in the case where the metal is a metal other than noble metals such as cobalt and nickel, the amount be 2 to 50% by mass as a metal oxide based on the mass of the catalyst support. In addition, it is preferable that in the case where the metal is a noble metal such as platinum, palladium, rhodium, and iridium, the entire amount of the metal be 0.1 to 3.0% by mass based on the entire mass of the catalyst support. In the case where the content of the metal having a hydrogenation activity is less than the lower limit value, hydrocracking tends not to sufficiently proceed. On the other hand, in the case where the content of the metal having a hydrogenation activity is more than the upper limit value, dispersion of the metal having a hydrogenation activity tends to be reduced to reduce the activity of the catalyst, and cost of the catalyst is increased.

A mixture of the raw wax fraction and the uncracked wax (hereinafter, also referred to as the "wax for processing") is hydrocracked in the wax fraction hydrocracking reactor 34 and converted to a component corresponding to the middle distillate. In this case, the olefins contained in the raw wax fraction are hydrogenated and converted to paraffin hydrocarbons, and the oxygen-containing compounds such as alcohols are hydro-deoxidized and converted to paraffin hydrocarbons, water, and the like. Further, the production of isoparaffins by hydro-isomerization of normal paraffins contributing to improving cold flow property as a base stock for fuel oil also proceeds. In addition, a part of the wax for processing excessively undergoes hydrocracking, and is converted to hydrocarbons corresponding to a naphtha fraction with a boiling point less than that of hydrocarbons with a boiling point range comparable to the middle distillate intended. In addition, a part of the wax for processing is further hydrocracked and converted to gaseous hydrocarbons having carbon number of 4 or less, such as butanes, propane, ethane, and methane. On the other hand, a part of the wax for processing is discharged as the uncracked wax from the wax fraction hydrocracking reactor 34 without being sufficiently hydrocracked.

In the hydrocracking of the wax for processing in the wax fraction hydrocracking reactor 34, it is desirable that a "cracking rate" defined by the following formula (1) be 50 to 90%, preferably 60 to 80%.

$$\text{Cracking rate (\%)} = ((\text{mass of hydrocarbons with boiling point of higher than } 360°C \text{ in unit mass of wax for processing}) - (\text{mass of hydrocarbons with boiling point of higher than } 360°C \text{ in unit mass of hydrocracking product})) \times 100/(\text{mass of hydrocarbons with boiling point of higher than } 360°C \text{ in unit mass of wax for processing}) \ldots (1)$$

In the case where the cracking rate is lower than 50%, the hydrocracking of the wax for processing is insufficient to reduce the ratio of the fraction with a boiling point range comparable to the middle distillate accounting for the hydrocracking product. On the other hand, in the case where the cracking rate is higher than 90%, the cracking of the wax for processing excessively proceeds to increase the production of hydrocarbons with a boiling point lower than the lower limit in the boiling point ratio of the middle distillate, thereby reducing the ratio of the middle distillate accounting for the cracking product. A method is general in which the cracking rate is controlled by a reaction temperature in the wax fraction hydrocracking reactor 34.

It is to be noted that the above-described "uncracked wax" refers to one in which hydrocracking does not proceed until the boiling point becomes 360°C or lower in the wax for processing. The uncracked wax is separated as a bottom oil in the second fractionator 60 described later and recycled to the wax fraction hydrocracking reactor 34. In addition, the "hydrocracking product" means all products comprising the uncracked wax discharged from the wax fraction hydrocracking reactor 34, unless otherwise noted.

Examples of a reaction temperature in the wax fraction hydrocracking reactor 34 (weight average catalyst bed temperature) can include 180°C to 400°C, preferably 200°C to 370°C, more preferably 250°C to 350°C, and further preferably 280°C to 350°C. If the reaction temperature is higher than 400°C, the hydrocracking excessively proceeds, and the yield of the middle distillate intended tends to be reduced. Further, the hydrocracking product is colored and is limited to be used as a fuel base stock in some cases. On the other hand, if the reaction temperature is lower than 180°C, the hydrocracking of the wax fraction does not proceed sufficiently, and the yield of the middle distillate tends to be reduced. Further, the olefins and the oxygen-containing compounds such as alcohols in the wax fraction tend not to be sufficiently removed.

A hydrogen partial pressure in the wax fraction hydrocracking reactor 34 is for example 0.5 to 12 MPa, and 1.0 to 5.0 MPa is preferable.

A liquid hourly space velocity (LHSV) in the wax fraction hydrocracking reactor 34 is for example 0.1 to 10.0 $h^{-1}$, and 0.3 to 3.5 $h^{-1}$ is preferable. A ratio of the hydrogen gas and the wax fraction (ratio of hydrogen gas/oil) is not particularly limited, but it is for example 50 to 1000 NL/L, and 70 to 800 NL/L is preferable. Here, the "NL" means a hydrogen capacity (L) at the normal state (0°C, 101325 Pa). In the case where the ratio of hydrogen gas/oil is lower than 50 NL/L, hydrocracking tends not to sufficiently proceed; on the other hand, in the case where the ratio of hydrogen gas/oil is higher than 1000 NL/L, a large-sized hydrogen feeding source tends to be needed.

The hydrocracking product discharged from the wax fraction hydrocracking reactor 34 is separated into gas and liquid in the gas liquid separator 44. Specifically, a gas component comprising unreacted hydrogen gas and hydrocarbon gas of mainly $C_4$ or less is separated from a liquid component that is a hydrocarbon oil with a carbon number distribution corresponding to from the naphtha fraction to the uncracked wax. The separated gas component is reused in the hydroprocessing reaction. The liquid component is mixed with the hydrotreated middle distillate fed from the middle distillate hydrotreating reactor 32 through the gas liquid separator 42, and fed to the second fractionator 60.

In the second fractionator 60, a plurality of cut points are set depending on the hydrocarbon oil to be discharged, so that a mixed oil of the hydrotreated middle distillate fed from the middle distillate hydrotreating reactor 32 and the hydrocracked wax fraction fed from the wax fraction hydrocracking reactor 34 is fractionated.

In the present embodiment, the cut points are set at 150°C, 250°C, and 360°C. From the top of the second fractionator 60, the light fraction containing the naphtha fraction is discharged by the line 10 and fed to the naphtha stabilizer 50 by which $C_4$ or less hydrocarbon gas is then removed to store product naphtha into the naphtha tank 70. From the middle portion of the second fractionator 60, the kerosene fraction is discharged by the line 11 and stored in the kerosene tank 72. From the lower portion of the second fractionator 60, the gas oil fraction is discharged by the line 12 and stored in the gas oil tank 74. From the bottom of the second fractionator 60, the bottom oil containing the uncracked wax as a main component is discharged by the line 13, recycled to the line 4, fed to the wax fraction hydrocracking reactor 34 together with the raw wax fraction and hydrocracked again.

In this way, the gas oil fraction, the kerosene fraction, and the naphtha fraction are obtained.

The process for producing a hydrocarbon oil of the present invention is not limited to an example of the above-described embodiment, and various alterations, substitutions, additions and the like can be made without departing from the spirit of the present invention.

For example, in the above-described embodiment, an embodiment is adopted in which the FT synthetic oil fed from the FT synthesis reaction apparatus is fractionated in the first fractionator 20 to a raw naphtha fraction, a raw middle distillate, and a raw wax fraction, but in this fractionation, the raw naphtha fraction and the raw middle distillate may be obtained as one fraction as a raw naphtha/middle distillate. Then, the raw naphtha/middle distillate may be subjected to hydrotreating in a single hydrotreating reactor packed with the regenerated hydrotreating catalyst of the present invention.

Further, the FT synthetic oil may be fractionated, without being fractionated in the first fractionator 20, by gas liquid separation at a temperature in the FT synthesis reaction apparatus into light liquid hydrocarbons by cooling and liquefying light hydrocarbons that are in a gas state at the temperature, and heavy liquid hydrocarbons that are in a liquid state at the temperature. Then, without providing the naphtha fraction hydrotreating reactor 30, the light liquid hydrocarbons are subjected to hydrotreating in the middle distillate hydrotreating reactor 32 packed with the regenerated hydrotreating catalyst of the present invention, and the heavy liquid hydrocarbons may be subjected to hydrocracking in the wax fraction hydrocracking reactor 34.

In addition, in the above-described embodiment, an embodiment is adopted in which a mixture of the hydrotreated middle distillate discharged from the middle distillate hydrotreating reactor 32 and the hydrocracking product of the wax fraction discharged from the wax fraction hydrocracking reactor 34 is fractionated in the second fractionator 60, but not limited to this, and, for example, the hydrotreated middle distillate discharged from the middle distillate hydrotreating reactor 32 and the hydrocracking product of the wax fraction discharged from the wax fraction hydrocracking reactor 34 may separately be fractionated in the respective fractionators.

Further, in the above-described embodiment, the naphtha fraction, the kerosene fraction, and the gas oil fraction are obtained as products, but the kerosene fraction and the gas oil fraction may be obtained as one fraction (middle distillate).

Examples

Hereinafter, the present invention will be described in more detail by Examples, but it is not to be limited to the following Examples.

(Reference Example)

<Preparation of new hydrotreating catalyst>

Water was added to a composition containing 60% by mass of powdered silica zirconia (molar ratio of silica / zirconia (molar ratio of silica to zilconia): 7) and 40% by mass of powdered alumina and kneaded into a clay-like form to prepare a kneaded mixture. This kneaded mixture was molded by extrusion molding into a cylinder with a diameter of about 1.5 mm and a length of about 3 mm. The obtained mold was dried at 120°C for 3 hours and further calcined in air at 450°C for 3 hours to obtain a catalyst support.

This catalyst support was impregnated by an incipient wetness method with an aqueous solution of dichlorotetraammine platinum (II) to be 0.8% by mass as a platinum atom based on the mass of the catalyst support and further dried at 120°C for 3 hours to obtain a catalyst precursor.

Next, the catalyst precursor obtained above was calcined at 500°C for 1 hour under an air atmosphere to obtain a hydrotreating catalyst.

<Production of hydrocarbon oil using new hydrotreating catalyst>

The hydrotreating catalyst obtained above was packed in a fixed bed flow reactor, and reduced under a stream of hydrogen at 340°C for 4 hours to be activated.

Next, a FT synthetic oil obtained by a FT synthesis reaction was fractionated in a fractionator to obtain, as a raw oil, a hydrocarbon oil in a middle distillate whose boiling point was in the range of 150 to 360°C ($C_{11}$ to $C_{21}$). As a result of analyzing this raw oil, it was normal paraffin containing 3.6% by mass of olefins and 4.0% by mass of oxygen-containing compounds.

The raw oil was fed together with hydrogen gas to the fixed bed flow reactor packed with the hydrotreating catalyst to perform hydrotreating (hydrotreating reaction and hydro-isomerization reaction). The reaction conditions were set to a reaction pressure (pressure of hydrogen gas) of 3.0 MPa, LHSV of 2.0 h$^{-1}$, and a gas/oil ratio of 340 NL/L. In addition, octadecanes ($C_{18}$) in the product were analyzed by gas chromatograph, the ratio of octadecanes having a branched chain (isooctadecanes) to all octadecanes (100 x mass of isooctadecanes/mass of all octadecanes; $C_{18}$ isomer ratio) was calculated, and a reaction temperature was determined so that this $C_{18}$ isomer ratio became 85%. The reaction temperature was 334°C at the start of the operation.

The product discharged from the reactor was cooled to about 35°C by a heat exchanger and separated into a gas component and a liquid component by a gas liquid separator, and the liquid component (hydrocarbon oil) was fed to a fractionator and fractionated with the cut point being 250°C to obtain a fraction with a boiling point of 250°C or higher as a gas oil fraction.

Since the activity of the hydrotreating catalyst decreased with the time on stream, the reaction temperature was increased so that the $C_{18}$ isomer ratio was monitored over time and was constantly 85%. Then, the operation was stopped when 11000 hours elapsed after starting of the operation, the inside of the reactor was purged with nitrogen gas, and the reactor was cooled to room temperature and then opened to take out the packed used catalyst.

(Example 1)

<Preparation of regenerated hydrotreating catalyst>

(Carbon measurement step)

A portion from the used catalyst obtained in Reference Example was collected as a sample, sufficiently washed with hexane, and then dried at 70°C for 2 hours in a reduced-pressure drier. The carbonaceous substance contained in this sample was quantified using the carbon/sulfur analyzer EMIA-920V manufactured by Horiba, Ltd. As a result, the used catalyst contained 3.5% by mass of the carbonaceous substance as a carbon atom based on the entire dry mass thereof. In addition, from change in the mass of the sample between before and after the hexane washing/drying, the hydrocarbon content of the used catalyst was calculated to be 9% by mass based on the entire dry mass of the catalyst.

(Deoiling step)

A deoiling treatment at 400°C for 3 hours in a stream of nitrogen was performed for the used hydrotreating catalyst.

(Calcination step)

The deoiled used catalyst was charged into a heating furnace, heated to 300°C under an air atmosphere, then heated at heating rate of 10°C/h between 300 and 400°C, and then calcined at 500°C for 2 hours to obtain a regenerated hydrotreating catalyst. As a result of quantifying the carbonaceous substance in the resulting regenerated hydrotreating catalyst using the above-described carbon/sulfur analyzer, it was 0.05% by mass in terms of a carbon atom based on the entire mass of the catalyst.

<Production of hydrocarbon oil using regenerated catalyst>

Hydrotreating of the hydrocarbon raw oil in the FT synthetic oil-derived middle distillate was performed in the same way as in "Production of hydrocarbon oil using new hydrotreating catalyst" in Reference Example except that the regenerated hydrotreating catalyst obtained above was charged into the reactor. Since the activity of the catalyst decreased with the time on stream the reaction temperature was increased so that the $C_{18}$ isomer ratio of the produced oil maintained 85%. The reaction temperature at which the $C_{18}$ isomer ratio was 85% when 2000 hours elapsed after starting of the operation (in a stable phase) was 341°C. In addition, in this case, the yield of the gas oil fraction calculated from the ratio of the flow rate of the gas oil fraction discharged from the fractionator to the mass flow rate of the fed raw oil was 43% by mass. Neither olefins nor oxygen-containing compounds were substantially contained in the produced oil. The results are shown in Table 1.

(Example 2)

<Preparation of regenerated hydrotreating catalyst>

A regenerated hydrotreating catalyst was obtained in the same way as in Example 1 except that the calcination conditions after the heating were set to 500°C and 0.5 hour in the calcination step for the regenerated hydrotreating catalyst. The content of the carbonaceous substance in this regenerated hydrotreating catalyst was 0.5% by mass in terms of a carbon atom.

<Production of hydrocarbon oil>

Hydrotreating of the FT synthetic oil-derived middle distillate was performed in the same way as in Example 1 except that the regenerated hydrotreating catalyst obtained above was charged into the reactor. The reaction temperature at which the $C_{18}$ isomer ratio was 85% after an operation time of 2000 hours was 343°C, and the yield of the gas oil fraction was 44% by mass. In addition, neither olefins nor oxygen-containing compounds were substantially contained in the produced oil. The results are shown in Table 1.

(Example 3)

<Preparation of regenerated hydrotreating catalyst>

A regenerated hydro-isomerization catalyst was obtained in the same way as in Example 1 except that the calcination conditions after the heating were set to 490°C and 0.5 hour in the calcination step for the regenerated hydrotreating catalyst. The content of the carbonaceous substance in this regenerated hydrotreating catalyst was 0.8% by mass in terms of a carbon atom.

<Production of hydrocarbon oil>

Hydrotreating of the FT synthetic oil-derived middle distillate was performed in the same way as in Example 1 except that the regenerated hydrotreating catalyst obtained above was charged into the reactor. The reaction temperature at which the $C_{18}$ isomer ratio was 85% after an operation time of 2000 hours was 344°C, and the yield of the gas oil fraction was 44% by mass. In addition, neither olefins nor oxygen-containing compounds were substantially contained in the produced oil.
The results are shown in Table 1.

(Example 4)

<Preparation of regenerated hydrotreating catalyst>

(First deoiling step)

A deoiling treatment at 400°C for 3 hours in a stream of nitrogen was performed for the used catalyst obtained in Reference Example.

(First calcination step)

The deoiled used catalyst was charged into a heating furnace, heated to 300°C under an air atmosphere, then heated at a heating rate of 10°C/h between 300 and 400°C, and then calcined at 580°C for 1 hour to obtain a preliminary regenerated catalyst. As a result of quantifying the carbonaceous substance in the resulting preliminary regenerated catalyst, carbon was not detected (content in terms of a carbon atom was 0.02% by mass or less).

(Dipping step)

The above-described preliminary regenerated catalyst was dipped in the gas oil fraction obtained in "Production of hydrocarbon oil using new hydrotreating catalyst" of Reference Example.

(Second deoiling step)

The preliminary regenerated catalyst was taken out from the gas oil fraction, and a deoiling treatment was performed at 400°C for 3 hours in a stream of nitrogen.

(Second calcination step)

The preliminary regenerated catalyst that underwent the second deoiling step was heated under the same conditions as the heating conditions of the first calcination step and then calcined at 450°C for 1 hour to obtain a regenerated hydrotreating catalyst. The content of the carbonaceous substance in this regenerated hydrotreating catalyst was 0.2% by mass in terms of a carbon atom.

<Production of hydrocarbon oil>

Hydrotreating of the FT synthetic oil-derived middle distillate was performed in the same way as in Example 1 using the regenerated hydrotreating catalyst obtained above. The reaction temperature at which the $C_{18}$ isomer ratio was 85% after an operation time of 2000 hours was 342°C, and the yield of the gas oil fraction was 44% by mass. In addition, neither olefins nor oxygen-containing compounds were substantially contained in the produced oil. The results are shown in Table 2.

(Comparative Example 1)

<Preparation of regenerated hydrotreating catalyst>

The catalyst (preliminary regenerated catalyst) obtained in "First calcination step" in "Preparation of regenerated hydrotreating catalyst" of Example 4 was directly used as a regenerated hydrotreating catalyst. As described above, the carbonaceous substance was not detected in this regenerated hydrotreating catalyst (content in terms of a carbon atom was 0.02% by mass or less).

<Production of hydrocarbon oil>

Hydrotreating of the FT synthetic oil-derived middle distillate was performed in the same way as in Example 1 except that the regenerated hydrotreating catalyst obtained above was charged into the reactor. The reaction temperature at which the $C_{18}$ isomer ratio was 85% after an operation time of 2000 hours was 340°C, and the yield of the gas oil fraction was 39% by mass. In addition, neither olefins nor oxygen-containing compounds were substantially contained in the produced oil. The results are shown in Table 1.

(Comparative Example 2)

<Preparation of regenerated hydrotreating catalyst>

A regenerated hydrotreating catalyst was obtained in the same way as in Example 4 except that the calcination conditions after the heating in "Second calcination step" in "Preparation of regenerated hydrotreating catalyst" of Example 4 were set to 430°C and 1 hour. The content of the carbonaceous substance in this regenerated hydrotreating catalyst was 1.2% by mass in terms of a carbon atom.

<Production of hydrocarbon oil>

Hydrotreating of the FT synthetic oil-derived middle distillate was performed in the same way as in Example 1 except that the regenerated hydrotreating catalyst obtained above was charged into the reactor. The reaction temperature at which the $C_{18}$ isomer ratio was 85% after an operation time of 2000 hours was 349°C, and the yield of the gas oil fraction was 41% by mass. In addition, neither olefins nor oxygen-containing compounds were substantially contained in the produced oil. The results are shown in Table 2.

[Table 1]

| | Example 1 | Example 2 | Example 3 | Comparative Example 1 |
|---|---|---|---|---|
| Used catalyst calcination temperature (°C) | 500 | 500 | 490 | 580 |
| Used catalyst calcination time (h) | 2 | 0.5 | 0.5 | 1 |
| Carbonaceous substance content (% by mass) | 0.05 | 0.5 | 0.8 | 0.02 or less |
| Reaction temperature at which $C_{18}$ isomer ratio became 85% (°C) | 341 | 343 | 344 | 340 |
| Yield of gas oil fraction (% by mass) | 43 | 44 | 44 | 39 |

[Table 2]

| | Example 4 | Comparative Example 2 |
|---|---|---|
| Calcination temperature of second calcination step (°C) | 450 | 430 |
| Calcination time of second calcination step (h) | 1 | 1 |
| Carbonaceous substance content (% by mass) | 0.2 | 1.2 |
| Reaction temperature at which $C_{18}$ isomer ratio became 85% (°C) | 342 | 349 |
| Yield of gas oil fraction (% by mass) | 44 | 41 |

From the results of Table 1 and Table 2, it was revealed that according to the regenerated hydrotreating catalysts of Examples 1 to 4 in which the content of the carbonaceous substance was 0.05 to 1% by mass, a high yield of the gas oil fraction compared with the regenerated hydrotreating catalyst of Comparative Example 1 in which the content of the carbonaceous substance was less than 0.05% by mass can be obtained at the same $C_{18}$ isomer ratio. In addition, in the regenerated hydrotreating catalyst of Comparative Example 2 in which the content of the carbonaceous substance was more than 1% by mass, a  relatively high yield of the gas oil can be obtained at the same $C_{18}$ isomer ratio, but a reaction temperature for obtaining the same $C_{18}$ isomer ratio is high and thus becomes a problem in terms of the life of the catalyst.

**Industrial Applicability**

According to the present invention, a regenerated hydrotreating catalyst that has a high hydro-isomerization activity and a suppressed cracking activity and is capable of obtaining a middle distillate excellent in cold flow property with a high yield, and a process for producing a hydrocarbon oil using the regenerated hydrotreating catalyst can be provided. A middle distillate excellent in cold flow property with a high yield using an inexpensive regenerated catalyst can thereby be obtained.

**Reference Signs List**

20 ... First fractionator, 30 ... Naphtha fraction hydrotreating reactor, 32 ... Middle distillate hydrotreating reactor, 34 ... Wax fraction hydrocracking reactor, 60 ... Second fractionator, 100 ... Apparatus for producing a hydrocarbon oil.

**Claims**

1.    A regenerated hydrotreating catalyst prepared by regenerating a used hydrotreating catalyst comprising a catalyst support comprising an amorphous composite metal oxide having solid acidity, and at least one active metal supported by the catalyst support and selected from noble metals of Group 8 to Group 10 in the periodic table, wherein the regenerated hydrotreating catalyst contains 0.05 to 1% by mass of a carbonaceous substance in terms of a carbon atom based on the entire mass of the catalyst.

2.    The regenerated hydrotreating catalyst according to claim 1, wherein the amorphous composite metal oxide is at least one selected from silica zirconia, silica alumina, and alumina boria.

3.    The regenerated hydrotreating catalyst according to claim 1 or 2, wherein the active metal is platinum.

4.    A process for producing a hydrocarbon oil, comprising contacting a raw oil comprising 80% by mass or more of straight-chain aliphatic hydrocarbons whose boiling point is in the range of 25 to 360°C and comprising 20% by mass or more of straight-chain aliphatic hydrocarbons whose boiling point is in the range of 150 to 360°C, with a regenerated hydrotreating catalyst according to any one of claims 1 to 3 in the presence of molecular hydrogen.

5.    The process for producing a hydrocarbon oil according to claim 4, wherein the raw oil is a synthetic oil obtained by a Fischer-Tropsch synthesis reaction.

**Fig.1**

<table>
<tr><td colspan="2" align="center">**INTERNATIONAL SEARCH REPORT**</td><td>International application No.<br>PCT/JP2012/057765</td></tr>
</table>

A. CLASSIFICATION OF SUBJECT MATTER
*B01J23/42*(2006.01)i, *B01J23/96*(2006.01)i, *B01J38/02*(2006.01)i, *C10G45/10*
(2006.01)i

According to International Patent Classification (IPC) or to both national classification and IPC

B. FIELDS SEARCHED

Minimum documentation searched (classification system followed by classification symbols)
B01J23/42, B01J23/96, B01J38/02, C10G45/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 05-123586 A (Idemitsu Kosan Co., Ltd.),<br>21 May 1993 (21.05.1993),<br>claims; paragraphs [0001], [0016], [0017],<br>[0024], [0034] to [0043]; table 5<br>& EP 0541994 A1 | 1-4<br>5 |
| X<br>A | JP 2000-000470 A (Idemitsu Kosan Co., Ltd.),<br>07 January 2000 (07.01.2000),<br>claims; paragraphs [0001], [0030], [0044] to<br>[0079]; tables 3, 8, 10, 13, 16<br>& US 6398950 B1            & EP 1029592 A1<br>& WO 1999/065604 A1 | 1-4<br>5 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 June, 2012 (08.06.12) | Date of mailing of the international search report<br>19 June, 2012 (19.06.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/057765 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 05-192571 A  (Shell International Research Maatschappij B.V.),<br>03 August 1993 (03.08.1993),<br>claims; paragraph [0001]<br>& EP 0532117 A1 | 5<br>1-4 |
| A | JP 2007-319844 A  (Idemitsu Kosan Co., Ltd.),<br>13 December 2007 (13.12.2007),<br>entire text<br>(Family: none) | 1-5 |
| A | JP 2007-518561 A  (Shell International Research Maatschappij B.V.),<br>12 July 2007 (12.07.2007),<br>entire text<br>& US 2005/0159296 A1     & WO 2005/070543 A1<br>& CA 2553857 A1          & CN 1921942 A | 1-5 |
| A | JP 2010-089087 A  (Eurecat S.A.),<br>22 April 2010 (22.04.2010),<br>entire text<br>& US 2010/0105541 A1     & EP 2174711 A1<br>& FR 2936962 A1          & CA 2681511 A1<br>& CN 101722061 A | 1-5 |
| A | JP 52-133303 A  (Arco Plaza Atlantic Richfield Co.),<br>08 November 1977 (08.11.1977),<br>entire text<br>& JP 62-160141 A          & US 4252632 A1<br>& US 4253939 A1          & US 4252686 A1<br>& US 4316795 A1          & GB 1585505 A<br>& GB 1585506 A          & GB 1585507 A<br>& FR 2349641 A1 | 1-5 |
| A | JP 63-236544 A  (Institut Francais du Petrole),<br>03 October 1988 (03.10.1988),<br>entire text<br>& US 4835129 A          & EP 0283343 A1<br>& FR 2611739 A1 | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004323626 A
- JP 2008169355 A
- JP 2007269901 A